# EUROPÄISCHE PATENTANMELDUNG

(11) **EP 0 592 974 A2**
(43) Veröffentlichungstag der Anmeldung: **20.04.1994**
(21) Anmeldenummer: 93116400.8
(22) Anmeldetag: 09.10.1993
(51) Int. Cl.: G01B 17/02

(54) **Wanddickenmesseinrichtung für extrudierte, insbesondere hohle Langprodukte**

(30) Priorität: 16.10.1992 DE 4234944
(71) Anmelder: FRIEDRICH THEYSOHN GmbH, D-32547 Bad Oeynhausen (DE)
(72) Erfinder: Krüger, Ernst, Dr., D-49124 Georgsmarienhütte (DE)
(74) Vertreter: Cohausz & Florack Patentanwälte

(57) **Zusammenfassung**

Die Erfindung bezieht sich auf eine Wanddickenmeßeinrichtung für extrudierte Langprodukte (3), die nach dem Ultraschallprinzip arbeitet. Um die die Meßwerte bei der Ultraschallmessung beeinflussende Temperatur des Langproduktes (3) zu berücksichtigen, ist vorgesehen, den ortsbezogenen Meßwerten für die Wanddicke ortsbezogene Temperaturmeßwerte zuzuordnen, die durch eine über die Wanddicke vorgenommene integrale Temperaturmessung ermittelt wurden. Die Wanddickenmeßwerte für die Orte, für die eine von der mittleren Temperatur aller Temperaturmeßwerte abweichende Temperatur festgestellt wurde, werden entsprechend korrigiert.

## Beschreibung

Die Erfindung bezieht sich auf eine Meßeinrichtung für extrudierte, insbesondere hohle Langprodukte, bestehend aus einem die Wandstärke des Langproduktes auf dessen gesamten Umfang beziehungsweise dessen gesamter Breite erfassenden Meßwertaufnehmer, insbesondere nach dem Ultraschallprinzip, und einer die ortsbezogenen Meßwerte dieses Aufnehmers empfangenden Auswerteeinheit.

Es ist bekannt, daß die nach dem Ultraschallprinzip arbeitenden Wanddickenmeßeinrichtungen Meßwerte liefern, die von der Dichte der Temperatur und dem Druck des extrudierten Produktes abhängig sind. Das bedeutet, daß das von einer Meßeinrichtung der vorgenannten Art aufgenommene Wanddickenprofil nicht nur keine absoluten Wanddickenmeßwerte liefert, sondern auch ihre Relation fehlerhaft sein kann. Da nach Austritt aus der Extruderdüse die Dichte des extrudierten Produktes und der Druck im Produkt konstant sind, brauchen bei der Messung nur die Einflüsse der Temperatur auf die Meßergebnisse berücksichtigt zu werden. Da die Langprodukte von außen gekühlt werden, kann das Temperaturprofil der Wanddicke des Langproduktes über dessen Umfang beziehungsweise Breite unterschiedlich sein. Das macht die Berücksichtigung der Temperatur bei einer Korrektur der Wanddickenmeßwerte schwierig.

Der Erfindung liegt die Aufgabe zugrunde, eine Wanddickenmeßeinrichtung zu schaffen, die ein Wanddickenprofil des extrudierten Langproduktes über dessen gesamten Umfang beziehungsweise Breite liefert, das für die Korrektur der Wanddicke beim Extrudieren brauchbar ist.

Diese Aufgabe wird erfindungsgemäß bei einer Wanddickenmeßeinrichtung der eingangs genannten Art dadurch gelöst, daß die Auswerteeinheit von einer über die Wanddicke integral messenden Temperaturmeßeinrichtung ortsbezogene Meßwerte erhält und in Abhängigkeit von diesen ortsbezogenen Meßwerten die ortsbezogenen Wanddickenmeßwerte für dieselben Orte bei einer Abweichung der Temperaturmeßwerte von deren Mittelwert korrigiert.

Die Erfindung basiert auf dem Gedanken, daß wegen des unterschiedlichen Temperaturprofils über die Wanddicke an den einzelnen Meßorten es für eine Korrektur der Wanddickenmeßwerte nicht in allen Fällen ausreicht, die Temperatur nur an der Oberfläche des Langproduktes zu messen, sondern eine integrale Temperaturmessung über die Wanddicke geeignet ist. Sie beruht weiter auf der Kenntnis, daß es für ein zur Korrektur der Wanddicke beim Extrudieren geeignetes Profil der relativen Wanddickenmeßwerte ausreicht, nur die durch die Ultraschallmessung gemessenen Meßwerte des Profils nach oben oder unten zu korrigieren, wenn die an den einzelnen Orten festgestellte Temperatur von einem Mittelwert aller gemessenen Temperaturen abweicht. Das Maß für die Korrektur ergibt sich aus der Abhängigkeit der materialspezifischen Ultraschallgeschwindigkeit von der Temperatur im entsprechenden Meßbereich. Zum Beispiel bei PO ändert sich die Geschwindigkeit um 0,3 % pro C. Die Temperatur kann sowohl am Ort der Wanddickenmessung, also hinter der Kühlkammer, als auch davor vorgenommen werden. Die Temperaturmeßeinrichtung kann in verschiedener Weise ausgebildet sein. So kann sie zur direkten Temperaturmessung eingerichtet sein. Eine dafür besonders geeignete, die Temperatur integral messende Temperaturmeßeinrichtung ist ein Strahlungspyrometer. Alternativ kann die Temperaturmeßeinrichtung aber auch eine Ultra- oder Infraschallmeßeinrichtung mit einer Temperaturauswerteeinheit umfassen.

Die Temperaturmeßeinrichtung kann vor oder hinter dem Meßwertaufnehmer für die Wanddicke angeordnet sein, vorzugsweise ist sie jedoch unmittelbar an der Extruderdüse angeordnet.

Im folgenden wird die Erfindung anhand einer ein Ausführungsbeispiel darstellenden Zeichnung näher erläutert.

Ein Extruder 1 mit Extruderdüse 2 produziert ein Langprodukt 3, beispielsweise ein Rohr oder Band. An der Düse 2 ist ein Stellglied 4 angeordnet, mit dem es möglich ist, das Profil des erzeugten Langproduktes 3 einzustellen und gegebenenfalls zu korrigieren. Dem Extruder 1 ist eine Kühlkammer 5 nachgeordnet, die mit einer nicht dargestellten Kalibriereinrichtung ausgerüstet sein kann. In der Kühlkammer 5 wird das Langprodukt 3 von außen so weit abgekühlt, daß es formstabil ist. Am Ausgang der Kühlkammer 5 ist ein Meßwertaufnehmer 6 für die Wanddicke angeordnet, der vorzugsweise nach dem Ultraschallprinzip arbeitet. Ein solcher Meßwertaufnehmer ist an sich bekannt und
kann über den zu messenden Umfang oder die zu messende Breite verteilt angeordnete stationäre Meßköpfe oder mindestens einen umlaufenden und/oder reversierenden Meßkopf haben. Statt eines nach dem Ultraschallprinzip arbeitenden Meßwertaufnehmers kann auch ein anderer, z.B. ein kapazitiv arbeitender Meßwertaufnehmer, eingesetzt werden. Ferner ist am Ausgang der Kühlkammer 5 - im Ausführungsbeispiel hinter dem Meßwertaufnehmer 6 für die Wanddicke - eine als Strahlungspyrometer ausgebildete Temperaturmeßeinrichtung 7 angeordnet, die mindestens mehrere verteilt angeordnete Pyrometer oder mindestens einen umlaufenden oder reversierenden Pyrometer aufweist. Die Temperaturmeßeinrichtung 7 kann auch der Kühlkammer 5 vorgeordnet sein.

Sowohl die Meßwertaufnehmer 6 für die Wanddicke als auch die Temperaturmeßeinrichtung 7 liefern an eine Auswerteeinheit 8 ortsbezogene Meßwerte. Die Auswerteeinheit 8 ist deshalb in der Lage, diese Meßwerte denselben Orten zuzuordnen. Die Auswerteeinheit 8 ist dafür eingerichtet, daß sie zum einen aus den Temperaturmeßwerten einen Mittelwert bildet und zum anderen bei vom Mittelwert abweichendem Meßwert den für denselben Ort ermittelten Wanddickenmeßwert in Abhängigkeit von der Größe der Temperaturabweichung korrigiert. Das Ergebnis ist eine Wanddickenmeßwertreihe, deren Meßwerte in richtiger Relation zu den realen Wanddicken stehen.

Das so erhaltene Wanddickenmeßprofil läßt sich für eine Steuerung des Stellgliedes 4 verwerten. Der Auswerteeinheit 8 kann nämlich eine Steuer- oder Regeleinheit 9 nachgeordnet sein, die dieses Wanddickenprofil mit einem vorgegebenen Profil vergleicht
und in Abhängigkeit von diesem Vergleich das Stellglied 4 ansteuert.

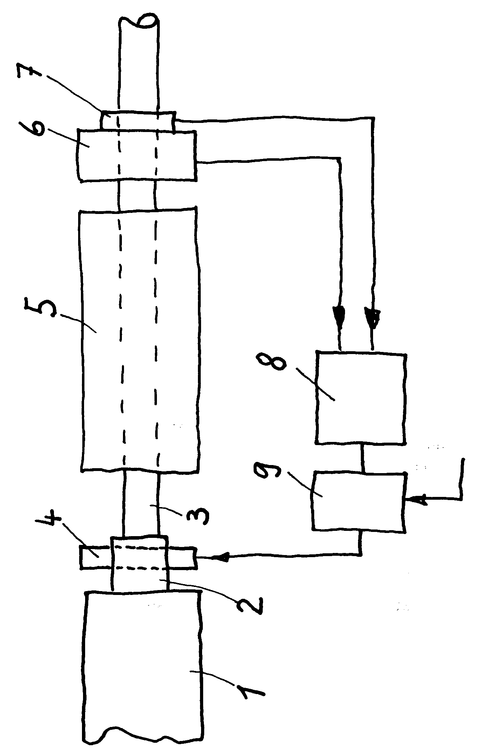

## Patentansprüche

1. Wanddickenmeßeinrichtung für extrudierte, insbesondere hohle Langprodukte, bestehend aus einer die Wanddicke des Langproduktes (3) auf dessen gesamten Umfang beziehungsweise dessen gesamter Breite erfassenden Meßwertaufnehmer (6), insbesondere nach dem Ultraschallprinzip, und einer die ortsbezogenen Meßwerte dieses Aufnehmers (6) empfangenden Auswerteeinheit (8), **dadurch gekennzeichnet,** daß die Auswerteeinheit (8) von einer für eine über die Wanddicke integral messenden Temperaturmeßeinrichtung (7) ortsbezogene Meßwerte erhält und in Abhängigkeit von diesen ortsbezogenen Meßwerten die ortsbezogenen Wanddickenmeßwerte für dieselben Orte bei einer Abweichung der Temperaturmeßwerte von deren Mittelwert korrigiert.

2. Wanddickenmeßeinrichtung nach Anspruch 1, **dadurch gekennzeichnet,** daß die Temperaturmeßeinrichtung (7) als Strahlungspyrometer ausgebildet ist.

3. Wanddickenmeßeinrichtung nach Anspruch 1, **dadurch gekennzeichnet,** daß die Temperaturmeßeinrichtung (7) eine Ultra- oder Infraschallmeßeinrichtung mit einer Temperaturauswerteeinheit umfaßt.

4. Wanddickenmeßeinrichtung nach einem der Ansprüche 1 bis 3, **dadurch gekennzeichnet,** daß die Temperaturmeßeinrichtung (7) vor oder hinter dem Meßwertaufnehmer (6) für die Wanddicke angeordnet ist.

5. Wanddickenmeßeinrichtung nach einem der Ansprüche 1 bis 4,
**dadurch gekennzeichnet,** daß die Temperaturmeßeinrichtung (7) unmittelbar an der Extruderdüse (2) angeordnet ist.
